# EUROPEAN PATENT SPECIFICATION

(11) **EP 3 498 505 B1**
(45) Date of publication and mention of the grant of the patent: **17.11.2021**
(21) Application number: 18211304.3
(22) Date of filing: 10.12.2018
(51) Int. Cl.: B60H 1/00, B60H 1/24, B60H 1/34, B60S 1/54, B60R 13/02

(54) **VEHICLE INCLUDING A VEHICLE AIR CONDITIONING DUCT STRUCTURE**
FAHRZEUG MIT EINER KANALSTRUKTUR EINER KLIMAANLAGE
VÉHICULE AVEC UNE STRUCTURE DE CONDUIT DE CLIMATISATION

(30) Priority: 12.12.2017 JP 2017238056
(43) Date of publication of application: 19.06.2019
(73) Proprietor: TOYOTA JIDOSHA KABUSHIKI KAISHA, Toyota-shi, Aichi-ken 471-8571 (JP)
(72) Inventor: DOI, Madoka, TOYOTA-SHI, AICHI-KEN, 471-8571 (JP); YAMAGISHI, Keisuke, OKAZAKI, AICHI PREFECTURE, 444-0911 (JP); ASAI, Noboru, OKAZAKI, AICHI PREFECTURE, 444-0911 (JP)
(74) Representative: Cabinet Beau de Loménie

(56) References cited:
- EP-A1- 2 058 157
- DE-A1- 2 318 097
- JP-A- H11 245 650

## Description

### BACKGROUND OF THE INVENTION

### 1. Field of the Invention

The present invention relates to a vehicle including a head-up display device and a vehicle air conditioning duct structure.

### 2. Description of Related Art

In a defroster device for removing (clarifying) a frost of a windshield glass, Japanese Patent Application Publication No. 2014-31043 (JP 2014-31043 A) discloses a structure in which an air outlet of a front defroster nozzle is disposed in a center portion of a vehicle width direction inside an instrument panel. In JP 2014-31043 A, a side defroster nozzle is connected to a front pillar and an air current is generated from a front pillar garnish toward a vehicle rear side along a front side glass so that air blowing from the air outlet of the front defroster nozzle is guided outward in the vehicle width direction. Similarly, as a structure in which the air outlet of the front defroster nozzle is disposed in the center portion of the vehicle width direction, a structure disclosed in Japanese Patent Application Publication No. 2000-233721 (JP 2000-233721 A) and Japanese Patent Application Publication No. 4-66353 (JP 4-66353 A) is known. European patent application n° EP2058157A1 discloses an air conditioner for a vehicle. German patent application DE2318097A1 discloses an outflow device for the removal of fogging on a side window of a vehicle. Japanese patent application n° JPH11245650A discloses an interior trim member for vehicle.

### SUMMARY OF THE INVENTION

Recently, there is a tendency that the instrument panel decreases in thickness in order to improve the design of a vehicle interior. However, as disclosed in JP 2014-31043 A, JP 2000-233721 A, and JP 4-66353 A, in the structure in which the front defroster nozzle is provided in the center portion of the vehicle width direction inside the instrument panel, since there is a need to ensure the air outlet of the front defroster nozzle inside the instrument panel, the instrument panel increases in size. Further, in order to handle an increase in size or the like of the head-up display device, a structure for saving a space inside the instrument panel has been demanded.

The invention provides a vehicle according to claim 1, capable of clarifying a frost of a windshield glass and a front side glass and saving a space inside an instrument panel.

A vehicle according to a first aspect of the invention includes a head-up display device and a vehicle air conditioning duct structure comprising a front defroster nozzle which is provided in a vehicle front part, extends in a vehicle width direction, and is formed such that one end portion is connected to an air conditioning device disposed on a rear surface side of an instrument panel and the other end portion is disposed inside a front pillar and is provided with a front side air outlet opening toward a windshield glass, and a side defroster nozzle which is branched from an upstream side of the front side air outlet of the front defroster nozzle and of which a tip portion is provided with a side air outlet opening toward a front side glass.

In the vehicle according to the first aspect, the front defroster nozzle extending in the vehicle width direction is provided in the vehicle front part and one end portion of the front defroster nozzle is connected to the air conditioning device disposed on the rear surface side of the instrument panel. Further, the other end portion of the front defroster nozzle is disposed inside the front pillar and the other end portion is provided with the front side air outlet opening toward the windshield glass. Accordingly, air blowing from the air conditioning device blows from the front pillar toward the windshield glass through the front defroster nozzle. As a result, it is possible to remove (clarify) the frost of the windshield glass even when the front side air outlet of the front defroster nozzle is not disposed in the center portion of the vehicle width direction inside the instrument panel. In this way, it is possible to save a space inside the instrument panel to a degree in which the front side air outlet of the front defroster nozzle may not be provided inside the instrument panel.

Further, the side defroster nozzle is branched from the upstream side of the front side air outlet of the front defroster nozzle and the tip portion of the side defroster nozzle is provided with the side air outlet opening toward the front side glass. In this way, since the side defroster nozzle is branched from the front defroster nozzle, a part of the front defroster nozzle can be shared with the side defroster nozzle. The "upstream side" mentioned herein means the upstream side of the air current blowing from the air conditioning device and the "upstream side of the front side air outlet" means a side near the air conditioning device in relation to the front side air outlet.

In the first aspect, the tip portion of the side defroster nozzle may be disposed inside the front pillar.

According to the above aspect, both of the front side air outlet of the front defroster nozzle and the side air outlet of the side defroster nozzle are disposed inside the front pillar. Accordingly, the air outlet can be integrated in the front pillar.

According to the above aspect, there is an excellent effect that the degree of freedom in design of the vehicle interior can be improved as compared with a configuration in which the air outlet is disposed in each of the instrument panel and the pillar.

In the first aspect, the front defroster nozzle may be provided with a guide portion which is configured to guide a part of air blowing from the front side air outlet toward a lower side of the windshield glass.

According to the above aspect, a part of air blowing from the front side air outlet blows toward the lower side of the windshield glass by the guide portion. Here, a general display region of the head-up display device in the vehicle equipped with the head-up display device is set to the lower side of the windshield glass. For this reason, since air blows from the front defroster nozzle toward the lower side of the windshield glass, it is possible to effectively remove (clarify) the frost of the display region of the head-up display device.

In the first aspect, a vehicle interior side of the front pillar may be formed by a pillar garnish, the pillar garnish may include a lateral wall portion which faces inward in the vehicle width direction and a front wall portion which extends from a front end portion of the lateral wall portion outward in the vehicle width direction and faces the windshield glass, and the front wall portion may be provided with a front opening portion configured to communicate with the front side air outlet.

According to the above aspect, the front opening portion is formed in the front wall portion of the pillar garnish forming the vehicle interior side of the front pillar and the front opening portion communicates with the front side air outlet of the front defroster nozzle. Here, the front wall portion of the pillar garnish extends outward in the vehicle width direction from the front end portion of the lateral wall portion facing the inside of the vehicle width direction and faces the windshield glass. For this reason, the front side air outlet (the front opening portion) cannot be easily viewed from the passenger.

According to the above aspect, there is an excellent effect that the design of the front pillar can be improved.

In the first aspect, in top view, the front defroster nozzle includes a width direction extension portion which is a portion being on a vehicle rear side of the head-up display device and extending in the vehicle width direction along the head-up display device and a front and rear direction extension portion which is a portion being on the outside of the head-up display device in the vehicle width direction and extending from an outer end portion of the width direction extension portion in the vehicle width direction in a vehicle front and rear direction.

According to the above aspect, in top view, the front defroster nozzle includes the width direction extension portion which extends in the vehicle width direction and the front and rear direction extension portion which extends in the vehicle front and rear direction from the outer end portion of the width direction extension portion in the vehicle width direction. Further, the width direction extension portion extends toward the vehicle rear side of the head-up display device along the head-up display device and the front and rear direction extension portion extends toward the outside of the head-up display device in the vehicle width direction. That is, the front defroster nozzle is disposed to go around the head-up display device from the vehicle rear side to the outside of the vehicle width direction in top view. Here, for example, when the front defroster nozzle is disposed to go around the head-up display device from the inside of the vehicle width direction to the vehicle front side in top view, the front defroster nozzle is disposed on the inside of the head-up display device in the vehicle width direction, then, when the head-up display device extends in the vehicle width direction, there is a possibility that the head-up display device may interfere with the front defroster nozzle. In contrast, when the front defroster nozzle is disposed to go around the head-up display device from the vehicle rear side to the outside of the vehicle width direction, it is possible to suppress the interference between the front defroster nozzle and the head-up display device even when the head-up display device extends in the vehicle width direction.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an enlarged perspective view showing a side defroster nozzle and a tip portion of a front defroster nozzle constituting a vehicle air conditioning duct structure of a vehicle according to an embodiment;
FIG. 2 is an enlarged perspective view corresponding to FIG. 1 when a vehicle front part adopting the vehicle air conditioning duct structure of the vehicle according to the embodiment is viewed from a vehicle interior side;
FIG. 3 is an enlarged perspective view showing FIG. 2 at a different angle and is a diagram showing a state when viewed from a driver seat;
FIG. 4 is a top view of the vehicle air conditioning duct structure of the vehicle according to the embodiment;
FIG. 5 is a rear view showing the vehicle air conditioning duct structure of the vehicle according to the embodiment when viewed from a vehicle rear side;
FIG. 6 is an outline diagram illustrating a flow of air blowing from a front defroster nozzle constituting the vehicle air conditioning duct structure of the vehicle according to the embodiment to a windshield glass and is a diagram when viewed from a vehicle rear side;
FIG. 7 is an outline diagram illustrating a flow of air blowing from the front defroster nozzle constituting the vehicle air conditioning duct structure of the vehicle according to the embodiment to the windshield glass and is a diagram when viewed from a vehicle width direction; and
FIG. 8 is a top view of a vehicle air conditioning duct structure according to a comparative example.

### DETAILED DESCRIPTION OF EMBODIMENTS

Hereinafter, a vehicle air conditioning duct structure of a vehicle according to embodiments will be described with reference to the drawings. The arrow FR appropriately shown in each of the drawings indicates the vehicle front side, the arrow UP indicates the upper side of the vehicle, and the arrow RH indicates the right side in the vehicle width direction. Hereinafter, when a description is made using front and rear, right and left, and up and down directions, it is assumed that these directions indicate front and rear in the front and rear direction of the vehicle, right and left in the vehicle right and left direction (the vehicle width direction), and up and down in the vehicle up and down direction unless otherwise specified.

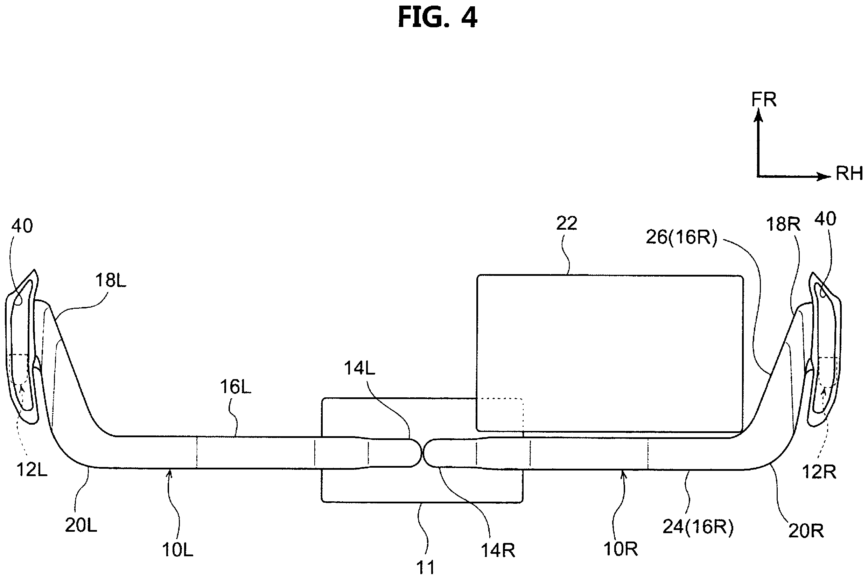

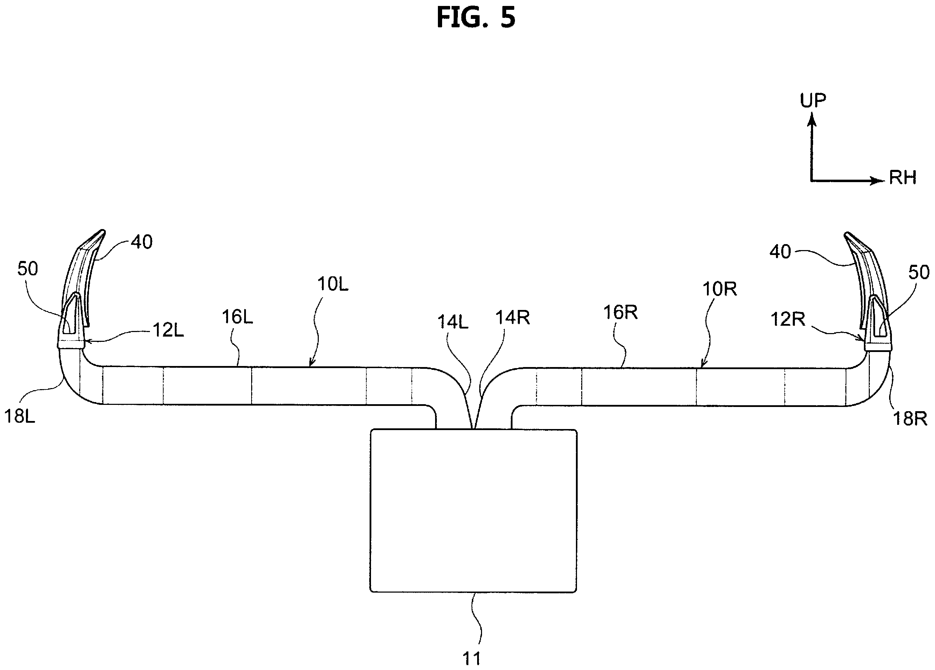

As shown in FIGS. 4 and 5, the vehicle air conditioning duct structure of the vehicle according to an embodiment includes a front defroster nozzle and a side defroster nozzle. The front defroster nozzle extends in the vehicle width direction and is provided as a pair of right and left nozzles in the embodiment. Further, the side defroster nozzle extends in the vehicle up and down direction and is provided as a pair of right and left nozzles in the embodiment. In the following description, the right front defroster nozzle will be referred to as a front defroster nozzle 10R and the left front defroster nozzle will be referred to as a front defroster nozzle 10L. Further, the side defroster nozzle on the side of the front defroster nozzle 10R will be referred to as a side defroster nozzle 12R and the side defroster nozzle on the side of the front defroster nozzle 10L will be referred to as a side defroster nozzle 12L.

The right front defroster nozzle 10R is located at the right side in relation to the center portion of the vehicle width direction and includes a nozzle base portion 14R, a nozzle body portion 16R, and a nozzle tip portion 18R. Further, the front defroster nozzle 10R is formed in a cylindrical shape on the whole and includes an air passage formed therein. Here, the nozzle base portion 14R forms the end portion of the front defroster nozzle 10R on the inside of the vehicle width direction and extends in the vehicle up and down direction so that the lower end portion (one end portion of the front defroster nozzle 10R) is connected to an upper portion of the air conditioning device 11.

The nozzle body portion 16R extends from the upper end portion of the nozzle base portion 14R outward in the vehicle width direction and the nozzle body portion 16R extends to the end portion of the front defroster nozzle 10R on the outside in the vehicle width direction. Further, as shown in FIG. 4, a curved portion 20R is formed at a position offset outward in the vehicle width direction in relation to the center portion of the nozzle body portion 16R in the vehicle width direction and the outside of the nozzle body portion 16R in the vehicle width direction is curved toward the vehicle front side by the curved portion 20R in top view.

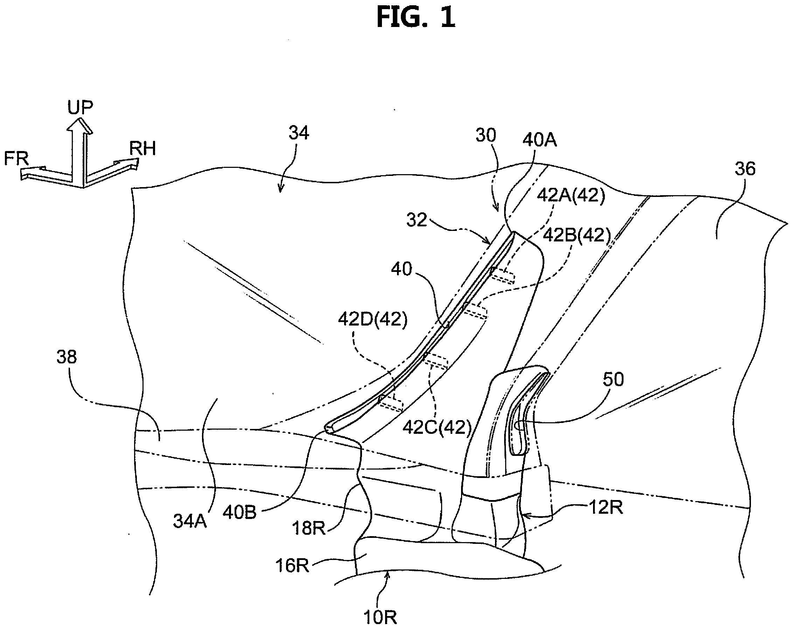

Here, in the embodiment, a head-up display device 22 is disposed inside an instrument panel 38 (see FIG. 1) to be located at the right side of the vehicle. The head-up display device 22 is a device that displays an image within the field of view of a driver by projecting an image onto a windshield or a combiner (reflection plate). Then, a portion on the inside of the nozzle body portion 16R in relation to the curved portion 20R in the vehicle width direction becomes a width direction extension portion 24 in which a portion on the vehicle rear side of the head-up display device 22 extends in the vehicle width direction along the head-up display device 22 in top view. Further, a portion on the outside of the nozzle body portion 16R in relation to the curved portion 20R in the vehicle width direction becomes a front and rear direction extension portion 26 in which a portion on the outside of the head-up display device 22 in the vehicle width direction extends in the vehicle front and rear direction. That is, the nozzle body portion 16R (the front defroster nozzle 10) is disposed to go around the head-up display device 22 from the vehicle rear side to the outside of the vehicle width direction in top view. Then, the nozzle tip portion 18R extends and protrudes from the tip portion (the front end portion) of the nozzle body portion 16R toward the upper side of the vehicle.

As shown in FIG. 1, the nozzle tip portion 18R extends in the vehicle up and down direction and the upper end portion of the nozzle tip portion 18R (the other end portion of the front defroster nozzle 10R) is disposed inside a front pillar 30. Specifically, the vehicle interior side of the front pillar 30 is formed by a pillar garnish 32 and the upper end portion of the nozzle tip portion 18R is disposed in a space between the pillar garnish 32 and a pillar body portion having a closed cross-section, which is not shown in the drawings. Then, the upper end portion of the nozzle tip portion 18R is provided with a front side air outlet 40.

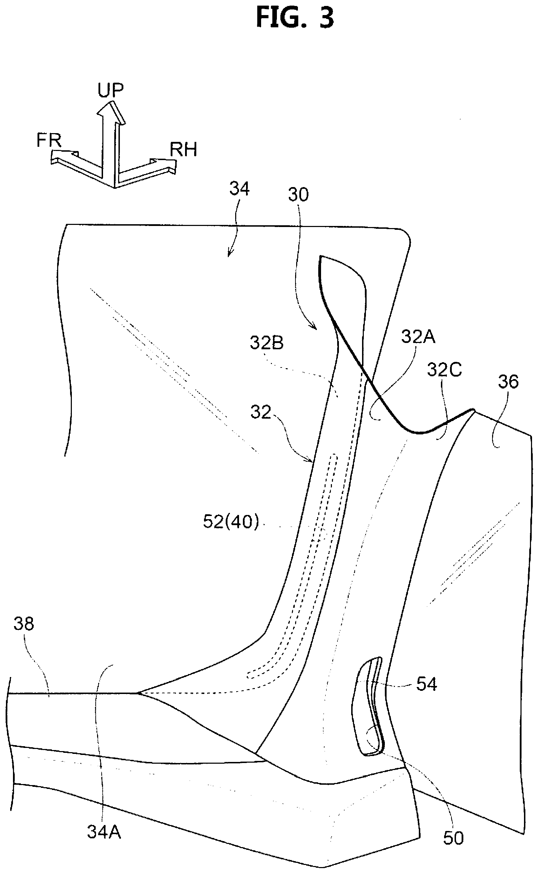

The front side air outlet 40 opens toward a windshield glass 34 in a direction along the pillar garnish 32 being a longitudinal direction (see FIG. 3). Further, the lower side of the front side air outlet 40 is curved so as to be convex toward the vehicle rear side corresponding to the shape of the pillar garnish 32. For this reason, the lower portion of the front side air outlet 40 is formed so as to face the upper side of the vehicle with respect to the upper portion thereof. The windshield glass 34 is a transparent plate member that is located at the front end portion of the instrument panel 38 and extends in the vehicle width direction and the vehicle up and down direction, and both end portions of the windshield glass 34 in the vehicle width direction are supported by the front pillar 30.

A plurality of ribs 42 is formed in the vicinity of the front side air outlet 40 of the nozzle tip portion 18R and four ribs 42A, 42B, 42C, 42D are formed as an example in the embodiment. Further, each of the four ribs 42A, 42B, 42C, 42D extends from an opening edge of the front side air outlet 40 toward the inside of the nozzle tip portion 18R in the vehicle up and down direction being a plate thickness direction. Then, these ribs 42A, 42B, 42C, 42D are used to reinforce the nozzle tip portion 18R and serve as a rectifier for air blowing from the front side air outlet 40.

The rib 42A is located at the uppermost side of the vehicle among the plurality of ribs 42 and is provided to guide air (air current) flowing from the air conditioning device 11 through the front defroster nozzle and blowing from the front side air outlet 40 toward the upper side of the windshield glass 34. For this reason, air flowing to the upper portion of the nozzle tip portion 18 blows from a space between the rib 42A and the upper edge 40A of the front side air outlet 40 toward the upper side of the windshield glass 34.

Meanwhile, the rib 42D is located at the lowermost side among the plurality of ribs 42 and is provided to guide air (air current) flowing from the air conditioning device 11 through the front defroster nozzle and blowing from the front side air outlet 40 toward a lower portion 34A of the windshield glass 34. For this reason, air flowing toward the lower portion of the nozzle tip portion 18 blows from a space between the rib 42D and a lower edge 40B of the front side air outlet 40 toward the lower portion 34A of the windshield glass 34. That is, the rib 42D corresponds to a "guide portion" in the vehicle of the invention.

The rib 42B and the rib 42C are provided between the rib 42A and the rib 42D. Then, air flowing to the center portion of the nozzle tip portion 18R in the up and down direction blows to the center portion of the windshield glass 34 in the up and down direction from a space between the rib 42A and the rib 42B, a space between the rib 42B and the rib 42C, and a space between the rib 42C and the rib 42D of the front side air outlet 40.

The side defroster nozzle 12R is branched from the upstream side of the front side air outlet 40 of the front defroster nozzle 10R and extends in the vehicle up and down direction. Further, the side defroster nozzle 12R is located on the rear side of the nozzle tip portion 18R of the front defroster nozzle 10R and the lower end portion of the side defroster nozzle 12R is connected to the front end portion of the nozzle body portion 16R of the front defroster nozzle 10R. Further, the upper end portion (the tip portion) of the side defroster nozzle 12R is disposed inside the front pillar 30 and the upper end portion (the tip portion) thereof is provided with a side air outlet 50.

The side air outlet 50 opens toward a front side glass 36 in a direction along the pillar garnish 32 being a longitudinal direction. Further, the side air outlet 50 is formed to be shorter than the front side air outlet 40 in the vehicle up and down direction and is curved so as to be convex toward the vehicle front side corresponding to the shape of the pillar garnish 32 when viewed from the vehicle width direction. For this reason, the upper portion of the side air outlet 50 is formed so as to face the lower side of the vehicle with respect to the lower portion thereof. Additionally, the front side glass 36 is a transparent plate member that is located at both end portions of the vehicle front part in the vehicle width direction and extends in the vehicle front and rear direction and the vehicle up and down direction.

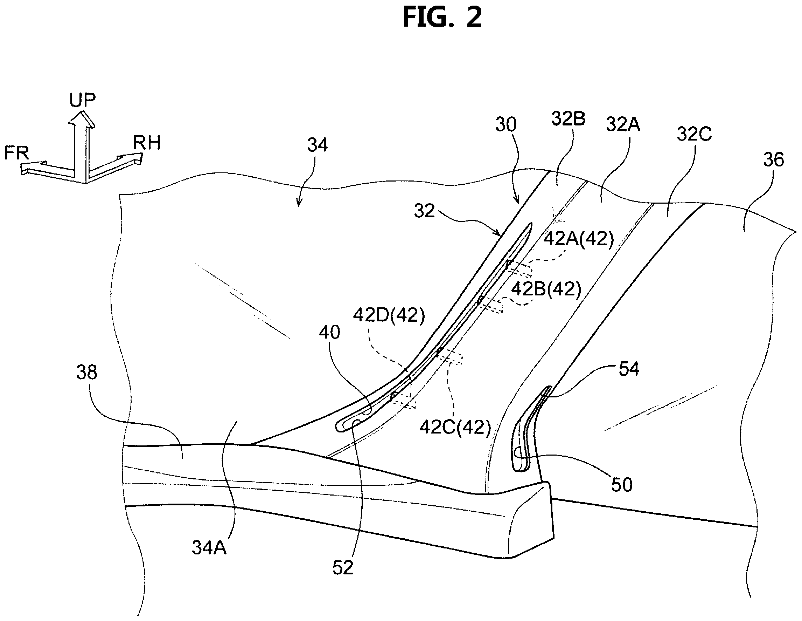

As shown in FIGS. 2 and 3, the pillar garnish 32 includes a lateral wall portion 32A, a front wall portion 32B, and a rear wall portion 32C and a cross-section when viewed from the upper side of the vehicle is formed in a substantially U-shape opened outward in the vehicle width direction. Here, the lateral wall portion 32A faces the inside in the vehicle width direction and faces the lateral wall portion of the pillar garnish constituting the front pillar on the left side of the vehicle, which is not shown in the drawings.

The front wall portion 32B extends from the front end portion of the lateral wall portion 32A outward in the vehicle width direction and faces the windshield glass 34, and the front wall portion 32B is provided with a front opening portion 52. The front opening portion 52 is formed at a position corresponding to the front side air outlet 40 of the nozzle tip portion 18 (the front defroster nozzle) and communicates with the front side air outlet 40. For this reason, air blowing from the front side air outlet 40 blows toward the windshield glass 34 through the front opening portion 52.

The rear wall portion 32C extends from the rear end portion of the lateral wall portion 32A outward in the vehicle width direction and faces the vehicle rear side and the rear wall portion 32C is provided with a rear opening portion 54. The rear opening portion 54 is formed at a position corresponding to the side air outlet 50 of the side defroster nozzle and communicates with the side air outlet 50. For this reason, air blowing from the side air outlet 50 blows toward the front side glass 36 through the rear opening portion 54.

As shown in FIGS. 4 and 5, the left front defroster nozzle 10L is located at the left side in relation to the center portion of the vehicle width direction and includes a nozzle base portion 14L, a nozzle body portion 16L, and a nozzle tip portion 18L. Further, the front defroster nozzle 10L of the embodiment is formed symmetrically with the right front defroster nozzle 10R. That is, the nozzle base portion 14L extends in the vehicle up and down direction and is connected to the upper portion of the air conditioning device 11 and the nozzle body portion 16L extends from the upper end portion of the nozzle base portion 14L outward in the vehicle width direction.

A curved portion 20L is formed at a position offset outward in the vehicle width direction in relation to the center portion of the nozzle body portion 16L in the vehicle width direction and the outside of the nozzle body portion 16L in the vehicle width direction is curved toward the vehicle front side by the curved portion 20L in top view. Then, the nozzle tip portion 18L extends and protrudes from the front end portion of the nozzle body portion 16L toward the upper side of the vehicle. The nozzle tip portion 18L extends in the vehicle up and down direction and the upper end portion of the nozzle tip portion 18L is disposed inside a front pillar (not shown) on the left side of the vehicle. Then, the upper end portion of the nozzle tip portion 18L is provided with the front side air outlet 40 and the front side air outlet 40 opens toward the windshield glass 34 (see FIG. 1) similarly to the right front defroster nozzle 10R.

Similarly to the right side defroster nozzle 12R, the side defroster nozzle 12L is branched from the upstream side of the front side air outlet 40 of the front defroster nozzle 10L. Further, the upper end portion of the side defroster nozzle 12L is disposed inside a front pillar (not shown) on the left side of the vehicle and the upper end portion is provided with the side air outlet 50 opening toward the front side glass 36 (see FIG. 1).

(Operations and Effects) Next, the operations and effects of the embodiment will be described.

In the embodiment, the pair of right and left front defroster nozzles is provided and one end portion (the nozzle base portion 14) of the front defroster nozzle is connected to the air conditioning device 11. Further, as shown in FIG. 1, the other end portion of the front defroster nozzle (the upper end portion of the nozzle tip portion 18) is disposed inside the front pillar 30 and the other end portion thereof is provided with the front side air outlet 40 opening toward the windshield glass 34. Accordingly, air can blow from the front pillar 30 toward the windshield glass 34 through the front defroster nozzle from the air conditioning device 11 and hence the frost of the windshield glass 34 can be removed (clarified).

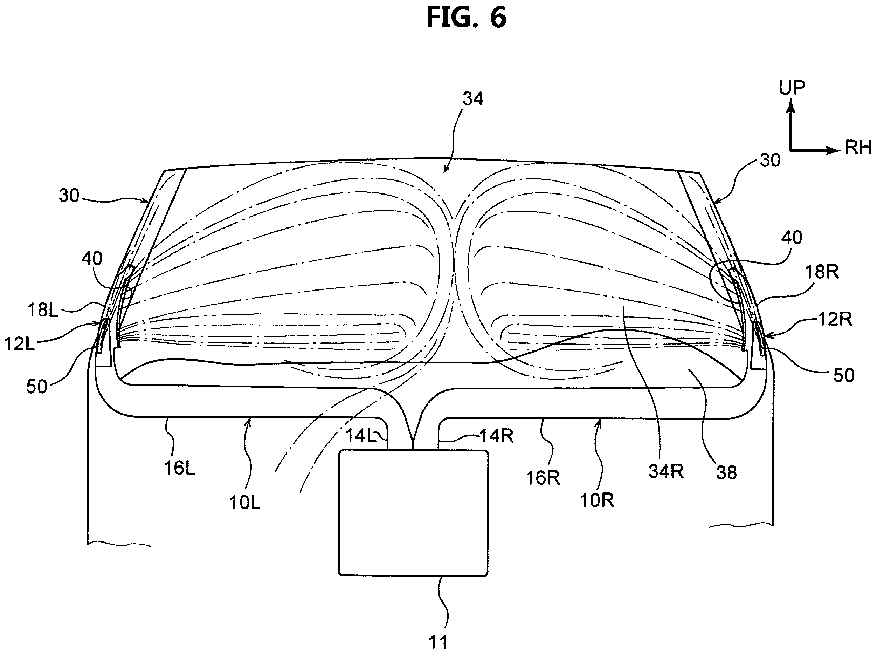

The above-described effect will be described with reference to FIG. 6. As shown in FIG. 6, air blowing from the front side air outlet 40 of the front defroster nozzle 10R toward the windshield glass 34 flows along the windshield glass 34 toward the inside of the vehicle width direction (the left side of the vehicle). Accordingly, the frost of the windshield glass 34 from the right half of the vehicle is removed.

Meanwhile, air blowing from the front side air outlet 40 of the front defroster nozzle 10L toward the windshield glass 34 flows along the windshield glass 34 toward the inside of the vehicle width direction (the right side of the vehicle). Accordingly, the frost of the windshield glass 34 from the left half of the vehicle is removed. As a result, it is possible to remove the frost of the windshield glass 34 even when the air outlet of the front defroster nozzle is not disposed in the center portion of the vehicle width direction inside the instrument panel 38. In this way, it is possible to save a space inside the instrument panel 38 to a degree that the front side air outlet 40 of the front defroster nozzle 10L may not be provided inside the instrument panel 38.

Further, the side defroster nozzle is branched from the upstream side of the front side air outlet 40 in the pair of right and left front defroster nozzles and the tip portion of the side defroster nozzle is provided with the side air outlet 50. In this way, by branching off the side defroster nozzle from the front defroster nozzle, a part of the front defroster nozzle can be shared with the side defroster nozzle. In this way, it is possible to save a space inside the instrument panel 38. Particularly, in the embodiment, as shown in FIG. 1, the side defroster nozzle 12R is branched at the nozzle tip portion 18R being the tip portion of the front defroster nozzle 10R. Accordingly, since it is possible to shorten the passage of the side defroster nozzle 12R, it is possible to effectively save a space.

Further, as shown in FIG. 6, in the embodiment, since air blows from the front side air outlet 40 formed in the pair of right and left front defroster nozzles toward the windshield glass 34, air currents collide with each other in the center portion of the windshield glass 34 in the vehicle width direction. Then, the colliding air currents flow in the center portion in the vehicle width direction from the vehicle front side to the vehicle rear side. As a result, in a vehicle of a general layout in which a driver seat is disposed at one side of the vehicle width direction and an assistant seat is disposed at the other end side of the vehicle width direction, an air current flows between the driver seat and the assistant seat, then, it is possible to prevent the air current from carelessly blowing to the passenger sitting on the driver seat or the assistant seat.

Further, in the embodiment, as shown in FIG. 1, both of the front side air outlet 40 of the front defroster nozzle and the side air outlet 50 of the side defroster nozzle are disposed inside the front pillar 30. In this way, since it is possible to integrate the front side air outlet 40 and the side air outlet 50 in the front pillar 30, it is possible to improve the degree of freedom in design of the vehicle interior. In particular, in a configuration in which the air outlet of the front defroster nozzle is formed in the upper surface or the like in the center portion of the vehicle width direction inside the instrument panel 38, it is necessary to form a step portion in the instrument panel 38 so that the air outlet does not enter the field of view of the passenger. That is, there is a restriction on the design of the instrument panel 38. In contrast, in the embodiment, since the air outlet of the front defroster nozzle can be removed from the instrument panel 38, it is not necessary to form the step portion in the instrument panel 38. In this way, it is possible to improve the degree of freedom in design of the vehicle interior.

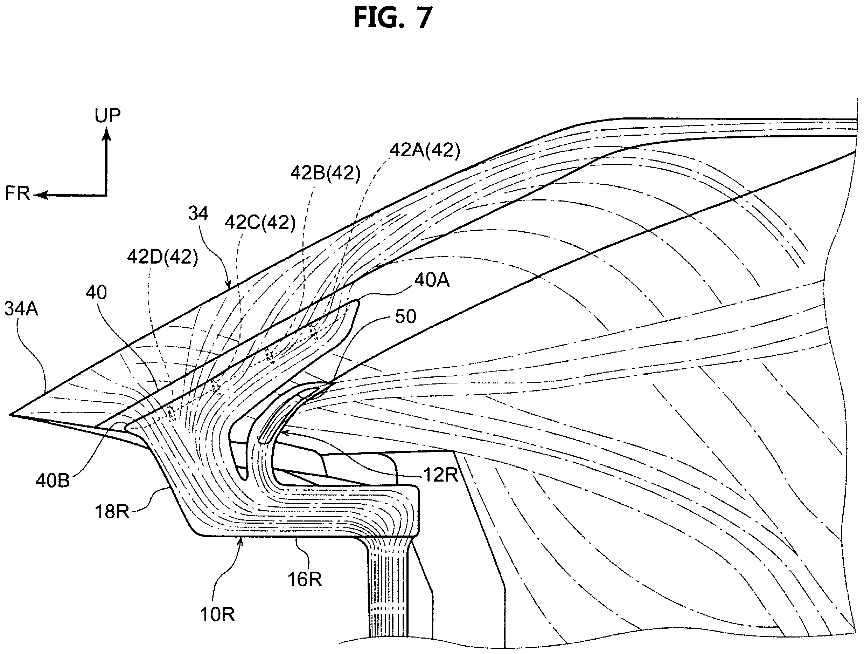

Furthermore, in the embodiment, as shown in FIG. 7, air blowing from a space between the lower edge 40B and the rib 42D of the front side air outlet 40 is guided by the rib 42D and blows toward the lower portion 34A of the windshield glass 34. Accordingly, in a vehicle that displays information on a region of the lower portion 34A of the windshield glass 34 by the head-up display device 22, the frost of the region used to display information by the head-up display device 22 can be effectively removed (clarified).

Meanwhile, air blowing from a space between the upper edge 40A and the rib 42A of the front side air outlet 40 is guided by the rib 42A and blows toward the upper side of the windshield glass 34. Similarly, air blowing from a space between the rib 42A and the rib 42B of the front side air outlet 40, air blowing from a space between the rib 42B and the rib 42C, and air blowing from a space between the rib 42C and the rib 42D respectively blow to the center portion of the windshield glass 34 in the vehicle up and down direction. In this way, it is possible to effectively remove (clarify) the frost of the entire surface of the windshield glass 34.

Further, in the embodiment, as shown in FIGS. 2 and 3, the front opening portion 52 is formed in the front wall portion 32B of the pillar garnish 32 and air blows from the front side air outlet 40 through the front opening portion 52. Accordingly, since the front side air outlet 40 (the front opening portion 52) is not easily viewed from the passenger, it is possible to improve the design of the front pillar 30.

Further, in the embodiment, as shown in FIG. 4, the nozzle body portion 16R of the right front defroster nozzle 10R includes the width direction extension portion 24 and the front and rear direction extension portion 26. Then, the front defroster nozzle 10R is disposed to go around the head-up display device 22 from the vehicle rear side to the outside of the vehicle width direction in top view. Accordingly, it is possible to suppress the interference between the head-up display device 22 and the front defroster nozzle even when the head-up display device 22 extends in the vehicle width direction.

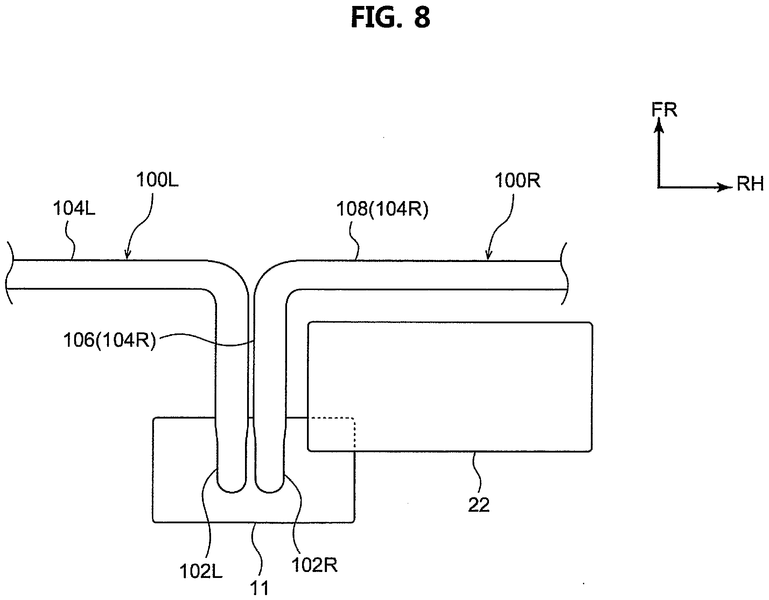

The above-described effects will be described with reference to the comparison with the structure of the comparative example shown in FIG. 8. In the comparative example of FIG. 8, a right front defroster nozzle 100R and a left front defroster nozzle 100L are provided and the right front defroster nozzle 100R is disposed to go around the head-up display device 22 from the inside of the vehicle width direction to the vehicle front side.

Specifically, the front defroster nozzle 100R includes a nozzle base portion 102R, a nozzle body portion 104R, and a nozzle tip portion (not shown) and the front defroster nozzle 100L includes a nozzle base portion 102L, a nozzle body portion 104L, and a nozzle tip portion (not shown). Here, the nozzle body portion 104R includes a front and rear direction extension portion 106 which extends from the nozzle base portion 102R toward the inside of the head-up display device 22 in the vehicle width direction along the head-up display device 22. Further, a width direction extension portion 108 extends outward in the vehicle width direction from the front end portion of the front and rear direction extension portion 106 and the width direction extension portion 108 extends to the vehicle front side of the head-up display device 22.

In the above-described structure of the comparative example, the front defroster nozzle 100R is disposed to go around the head-up display device 22 from the inside of the vehicle width direction to the vehicle front side in top view. As a result, when the head-up display device 22 extends, there is a possibility that the head-up display device 22 may interfere with the width direction extension portion 108 or the front and rear direction extension portion 106 of the front defroster nozzle 100R.

In contrast, in the structure of the embodiment, as shown in FIG. 4, the width direction extension portion 24 extends to the vehicle rear side of the head-up display device 22 along the head-up display device 22 and the front and rear direction extension portion 26 extends toward the outside of the head-up display device 22 in the vehicle width direction. That is, since the front defroster nozzle is disposed to go around the head-up display device 22 from the vehicle rear side to the outside of the vehicle width direction as described above, it is possible to suppress the interference with the front defroster nozzle 10R even when the head-up display device 22 extends in the vehicle width direction or the head-up display device 22 extends to the vehicle front side.

While the vehicle according to the embodiment has been described, various modifications can be, of course, made without departing from the scope of the invention as defined in the appended claims. For example, in the embodiment, as shown in FIG. 5, the front defroster nozzles 10L and 10R are provided and air blows from the front side air outlets 40 provided in the nozzle tip portions 18L and 18R of the front defroster nozzles 10L and 10R respectively, but the invention is not limited thereto. That is, the left front defroster nozzle 10L may not be provided. In this case, air blows only from the front side air outlet 40 of the right front defroster nozzle 10R to the windshield glass 34, but the frost of the entire surface of the windshield glass 34 may be removed by adjusting the shape of the front side air outlet 40 or the output of the air conditioning device 11.

Further, in the embodiment, as shown in FIG. 1, both of the upper end portion of the nozzle tip portion 18R and the upper end portion of the side defroster nozzle 12R are disposed inside the front pillar 30, but the invention is not limited thereto. For example, the side defroster nozzle 12R may be disposed on the vehicle rear side of the pillar garnish 32 of the front pillar 30 and the side defroster nozzle 12R may be disposed inside the upper end portion of the door trim of the side door.

Further, in the embodiment, the rib 42D disposed in the vicinity of the lower portion of the front side air outlet 40 of the nozzle tip portion 18R is formed as the guide portion, but the invention is not limited thereto. For example, a partition member that defines the inside of the nozzle tip portion 18R into the front and rear parts may be provided instead of the rib 42D and the partition member may be used as the guide portion. That is, the inner space of the nozzle tip portion 18R may be defined by forming the partition member from the front side air outlet 40 to the root portion of the nozzle tip portion 18R (the boundary portion with the nozzle body portion 16R).

## Claims

1. A vehicle including a head-up display device (22) and a vehicle air conditioning duct structure, said air conditioning duct structure comprising:
a front defroster nozzle (10R) which is provided in a vehicle front part, extends in a vehicle width direction, and is formed such that one end portion is connected to an air conditioning device (11) disposed on a rear surface side of an instrument panel (38) and the other end portion is disposed inside a front pillar (30) and is provided with a front side air outlet (40) opening toward a windshield glass (34); and
a side defroster nozzle (12R) of which a tip portion is provided with a side air outlet (50) opening toward a front side glass (36);
**characterized in that**:
the side defroster nozzle (12R) is branched from an upstream side of the front side air outlet (40) of the front defroster nozzle (10R); in top view, the front defroster nozzle (10R) includes a width direction extension portion (24) which is a portion being on a vehicle rear side of the head-up display device (22) and extending in the vehicle width direction along the head-up display device (22) and a front and rear direction extension portion (26) which is a portion being on the outside of the head-up display device (22) in the vehicle width direction and extending from an outer end portion of the width direction extension portion (24) in the vehicle width direction in a vehicle front and rear direction.

2. The vehicle according to claim 1, wherein the tip portion of the side defroster nozzle (12R) is disposed inside the front pillar (30).

3. The vehicle according to claim 1 or 2, wherein the front defroster nozzle (10R) is provided with a guide portion (42) which is configured to guide a part of air blowing from the front side air outlet (40) toward a lower side of the windshield glass (34).

4. The vehicle according to any one of claims 1 to 3, wherein:
a vehicle interior side of the front pillar (30) is formed by a pillar garnish (32);
the pillar garnish (32) includes a lateral wall portion (32A) which faces inward in the vehicle width direction and a front wall portion (32B) which extends from a front end portion of the lateral wall portion (32A) outward in the vehicle width direction and faces the windshield glass (34); and
the front wall portion (32B) is provided with a first opening portion (52) configured to communicate with the front side air outlet (40).

## Patentansprüche

1. Fahrzeug, das eine Head-up-Anzeigevorrichtung (22) und eine Fahrzeug-Klimaanlagen-Leitungsstruktur beinhaltet, wobei die Klimaanlagen-Leitungsstruktur umfasst:
eine vordere Entfrosterdüse (10R), die in einem vorderen Fahrzeugteil vorgesehen ist, sich in einer Fahrzeugbreitenrichtung erstreckt und so ausgebildet ist, dass eine Endsektion mit einer Klimaanlagen-Vorrichtung (11) verbunden ist, die an einer hinteren Oberflächenseite einer Instrumententafel (38) angeordnet ist, und die andere Endsektion innerhalb einer vorderen Säule (30) angeordnet ist und mit einem vorderen Seitenluftauslass (40) versehen ist, der sich zu einem Windschutzscheibenglas (34) hin öffnet, und
eine seitliche Entfrosterdüse (12R), deren Spitzensektion mit einem Seitenluftauslass (50) versehen ist, der sich zu einem vorderen Seitenglas (36) hin öffnet,
**dadurch gekennzeichnet, dass**:
die seitliche Entfrosterdüse (12R) von einer stromaufwärtigen Seite des vorderen Seitenluftauslasses (40) der vorderen Entfrosterdüse (10R) abgezweigt ist,
in der Draufsicht die vordere Entfrosterdüse (10R) eine sich in der Breitenrichtung erstreckende Sektion (24), die eine Sektion ist, welche sich an einer in Bezug auf das Fahrzeug hinteren Seite der Head-up-Anzeigevorrichtung (22) befindet und sich in der Fahrzeugbreitenrichtung entlang der Head-up-Anzeigevorrichtung (22) erstreckt, und eine sich in der Front-Heck-Richtung erstreckende Sektion (26) beinhaltet, welche eine Sektion ist, die sich an der Außenseite der Head-up-Anzeigevorrichtung (22) in der Fahrzeugbreitenrichtung befindet und sich von einer äußeren Endsektion der sich in der Breitenrichtung erstreckenden Sektion (24) in der Fahrzeugbreitenrichtung in einer Fahrzeug-Front-Heck-Richtung erstreckt.

2. Fahrzeug nach Anspruch 1, wobei die Spitzensektion der seitlichen Entfrosterdüse (12R) im Inneren der vorderen Säule (30) angeordnet ist.

3. Fahrzeug nach Anspruch 1 oder 2, wobei die vordere Entfrosterdüse (10R) mit einer Leitsektion (42) versehen ist, die dazu ausgestaltet ist, einen Teil der Luft, die aus dem vorderen Seitenluftauslass (40) geblasen wird, zu einer unteren Seite des Windschutzscheibenglases (34) hin zu leiten.

4. Fahrzeug nach einem der Ansprüche 1 bis 3, wobei:
eine zum Fahrzeuginnenraum gewandte Seite der vorderen Säule (30) durch eine Säulenblende (32) gebildet wird,
die Säulenblende (32) eine seitliche Wandsektion (32A), welche in der Fahrzeugbreitenrichtung nach innen gewandt ist, und eine vordere Wandsektion (32B) beinhaltet, welche sich von einer vorderen Endsektion der seitlichen Wandsektion (32A) in der Fahrzeugbreitenrichtung nach außen erstreckt und dem Windschutzscheibenglas (34) zugewandt ist, und
die vordere Wandsektion (32B) mit einer ersten Öffnungssektion (52) versehen ist, die dazu ausgestaltet ist, mit dem vorderen Seitenluftauslass (40) zu kommunizieren.

## Revendications

1. Véhicule comprenant un dispositif d'affichage tête haute (22) et une structure de conduit de climatisation de véhicule, ladite structure de conduit de climatisation comprenant :
une buse de dégivreur avant (10R) qui est prévue dans une partie avant de véhicule, s'étend dans une direction de largeur de véhicule, et est formée de telle sorte qu'une partie d'extrémité est reliée à un dispositif de climatisation (11) disposé sur un côté de surface arrière d'un tableau de bord (38) et l'autre partie d'extrémité est disposée à l'intérieur d'un montant avant (30) et est pourvue d'une sortie d'air du côté avant (40) qui s'ouvre vers une vitre de pare-brise (34) ; et
une buse de dégivreur latérale (12R) dont une partie d'extrémité est pourvue d'une sortie d'air latérale (50) qui s'ouvre vers une vitre du côté avant (36) ;
**caractérisé en ce que** :
la buse de dégivreur latérale (12R) a un embranchement depuis un côté amont de la sortie d'air du côté avant (40) de la buse de dégivreur avant (10R) ;
en vue de dessus, la buse de dégivreur avant (10R) comprend une partie d'extension de direction de largeur (24) qui est une partie qui est sur un côté arrière de véhicule du dispositif d'affichage tête haute (22) et s'étendant dans la direction de largeur de véhicule le long du dispositif d'affichage tête haute (22) et une partie d'extension de direction avant et arrière (26) qui est une partie qui est sur l'extérieur du dispositif d'affichage tête haute (22) dans la direction de largeur de véhicule et s'étendant depuis une partie d'extrémité extérieure de la partie d'extension de direction de largeur (24) dans la direction de largeur de véhicule dans une direction avant et arrière de véhicule.

2. Véhicule selon la revendication 1, dans lequel la partie d'extrémité de la buse de dégivreur latérale (12R) est disposée à l'intérieur du montant avant (30).

3. Véhicule selon la revendication 1 ou 2, dans lequel la buse de dégivreur avant (10R) est pourvue d'une partie de guidage (42) qui est configurée pour guider une partie d'air qui souffle depuis la sortie d'air du côté avant (40) vers un côté inférieur de la vitre de pare-brise (34) .

4. Véhicule selon l'une quelconque des revendications 1 à 3, dans lequel :
un côté intérieur de véhicule du montant avant (30) est formé par une garniture de montant (32) ;
la garniture de montant (32) comprend une partie de paroi latérale (32A) qui fait face vers l'intérieur dans la direction de largeur de véhicule et une partie de paroi avant (32B) qui s'étend depuis une partie d'extrémité avant de la partie de paroi latérale (32A) à l'extérieur dans la direction de largeur de véhicule et fait face à la vitre de pare-brise (34) ; et
la partie de paroi avant (32B) est pourvue d'une première partie d'ouverture (52) configurée pour communiquer avec la sortie d'air du côté avant (40).
